# EUROPEAN PATENT APPLICATION

(11) **EP 1 087 304 A2**
(43) Date of publication of application: **28.03.2001**
(21) Application number: 00120751.3
(22) Date of filing: 22.09.2000
(51) Int. Cl.: G06F 17/30

(54) **Information management technique**

(30) Priority: 24.09.1999 JP 27142799
(71) Applicant: NEC CORPORATION, Tokyo (JP)
(72) Inventor: Naoko, Ito, Tokyo (JP); Kenji, Takeda, Tokyo (JP)
(74) Representative: Glawe, Delfs, Moll & Partner

(57) **Abstract**

An information management system allowing the improved efficiency of data transfer in a network composed of a server (S) and a plurality of clients (C) is disclosed. The server (S) stores a structured document (F) to be shared among the clients and each of the clients (C) stores a duplication (F') of the structured document. When a part of the structured document is updated, the server notifies the clients of an update of the structured document using an updated minimum unit of the structured document including the updated portion of the structured document.

## Description

The present invention relates to an information management system in a network and, in particular, relates to a technique of managing update information when information such as a structured document stored in a storage device such as a server device on the network is updated.

In recent years, there has been proposed a function of accessing a server device on a network (in particular, the Internet) and taking out information from the network by using a mobile or portable terminal.

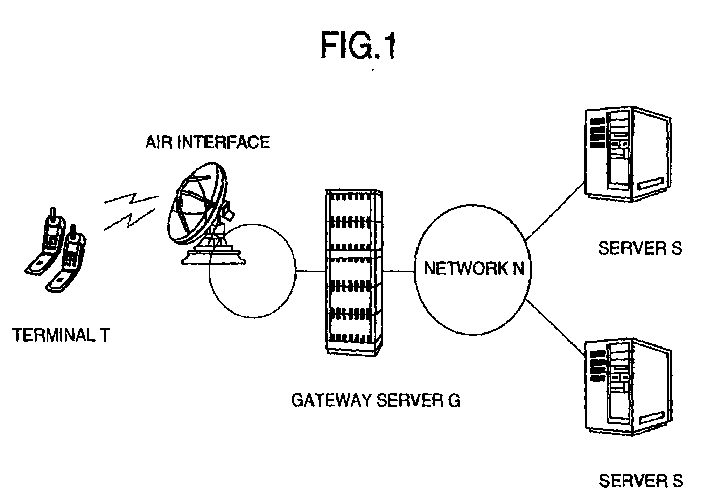

FIG. 1 shows an example of a system configuration for a portable terminal T to access a server device S existing on a network N. As shown in FIG. 1, a dedicated server device called a gateway server device G is installed at an access point for the network N so that the portable terminal T can access the network N on the network N.

The portable terminal T is connected to the gateway server device G via a radio channel. Communication is conducted via the radio channel by using a communication protocol called WAP (Wireless Application Protocol) and optimized for characteristics of the radio channel and the portable terminal T. Furthermore, between the server device S on the network and the gateway server device G, communication based upon a standard protocol of the network N is conducted. In the case where the network N is the Internet, the standard protocol includes Internet standard protocols, such as HTTP (HyperText Transfer Protocol) and TCP (Transmission Control Protocol).

The gateway server device G has a function of conducting protocol conversion and data conversion between the communication protocol of WAP and the standard protocol on the network N. For example, in the case where a document held in the server device S on the network has the HTML format, the gateway server device G has a function of converting the document of the HTML format to a document of WML (Wireless Markup Language) format used in the WAP. For example, in the case where a document held in the server device S on the network is a WML document of the text form, the gateway server device G has a function of converting the WML document of the text form into the binary form to perform data compression.

The WML serving as the standard language of WAP, which is a communication protocol between the gateway server device G and the portable terminal T, will now be described.

The WML has been proposed as a markup language for devices, such as portable telephones and PDAs (Personal Digital Assistants), limited in bandwidth or display size. The "markup language" means a language for directly embedding layout information and specifications such as character size and/or decoration, called tags, in the text and conducting screen display or printing.

In a WML document, there are two concepts called "deck" and "card". In the WML, one page of the document is called deck, and a unit of display which can be displayed on the portable terminal is called card. In other words, once a certain deck is downloaded, the deck is stored in a memory of the portable terminal, and the scrolling from a card to another card in the deck is conducted in the memory.

In general, a radio network is not suitable for exchange of data having a very large size. In addition, the portable terminal as a client device does not have a hard disk of a large capacity as installed in a personal computer. Therefore, it is better that received data are as small and compact as possible. Thus, as for contents created by the WML, the data size thereof can be made compact enough to be stored in the memory of the portable terminal.

Operation of the system having the above-described configuration will now be described by referring to FIG. 1.

First, the portable terminal T notifies the gateway server device G of the capability information of a storage section for storing document data. Here, it is assumed that this capability information represents the memory capacity of the portable terminal T.

Upon receiving this notice, the gateway server device G registers the capability information received from each portable terminal device T.

Subsequently, a deck acquisition request is sent from the portable terminal T to the server device S on the network N. As for communication at this time, the portable terminal T uses the telephone number of the gateway server device G to access the gateway server device G. Then, the gateway server device G looks at the address information of the server device S contained in the deck acquisition request received from the portable terminal T and gets access to the server device S.

Upon receiving this deck acquisition request, the server device S transmits a response containing address information identifying the portable terminal T as a request source to the gateway server device G. As a result, a deck requested by the portable terminal T is transmitted to the portable terminal T as the request source via the gateway server device G.

In the case where a shared document existing in both the client device (such as a portable terminal) and the server device is changed at both or one of the client device and the server device, however, it is necessary to transfer not a changed part of the document but the whole of the changed document to the other because document update management is conducted in units of a document.

For example, even if only a card which is a part of a document is updated in the document type WML used in the WAP, it is necessary to transmit a whole deck including the changed card again. In other words, even if there is the same document in a storage section of the client device, it is necessary to transmit the whole document to the client device so as to update the changed part of the document, resulting in extra data transmission.

In the WAP service for which a very large number of users are supposed, the number of requests sent to the server device at a time is also expected to become a considerable value. If a whole document is transmitted again each time the document is updated, then the load of the network increases and there is a possibility that an unexpected situation will occur.

Furthermore, even if a document is updated in the server device S, the update information is not broadcasted, but merely the newest document is transmitted when the client device has issued a document acquisition request.

Therefore, it is not possible to know whether a document held in the server device S has been updated, unless the client device C issues a document acquisition request. Even in the case where a document is not updated, a request from the client device C may occur. Especially in service of the WAP for which a large number of users are expected, the load of the network is likely to considerably increase.

In view of the above-described circumstances, the present invention has been made. An object of the present invention is to provide an information management system and an information update method allowing the improved efficiency of data transfer in a network composed of a server and a plurality of clients.

According to the present invention, in an information management system comprising a plurality of nodes connected to each other via a network, each of the plurality of nodes comprises: a storage for storing information to be shared among the plurality of nodes; and an update manager for managing an update of the information using an updated minimum unit of the information, the updated minimum unit including an updated portion of the information.

The update manager may transmit an updated minimum unit of the information to another node. The update manager may transmit update information to another node, the update information including identification information identifying an updated minimum unit of the information.

At a node receiving an updated minimum unit of the information from another node, the update manager may update a corresponding minimum unit of the information stored in the storage using the updated minimum unit received.

The information may comprise a plurality of elements which are hierarchically structured, wherein a minimum element including the updated portion of the information is determined as the updated minimum unit.

The update manager may manage the update of the information using an update time at which the update of the information occurs and, when an update occurs at the node, transmit update information to another node, the update information including the update time.

At a node receiving the update information from another node, the update manager may update the information stored in the storage based on the update information received. More specifically, the update manager determines whether the update time of the update information received is later than an updated time of the information currently stored in the storage. When the update time of the update information received is later than an updated time of the information currently stored in the storage, the update manager requests transfer of an updated minimum unit of the information.

The update manager may transmit an updated minimum unit of the information to another node at a plurality of predetermined times.

The update manager may transmit update information to another node at a plurality of predetermined times, the update information including identification information identifying an updated minimum unit of the information. The update manager manages the update of the information using an update time at which the update of the information occurs, the update information further includes the update time.

According to another aspect of the present invention, the information management system may further include a control node for controlling communications between the nodes on the network. The control node may include: an information manager for managing the information stored in the storage for each of the nodes; an update information receiver for receiving an update information from a first node at which an update of the information occurs; and an update controller for transmitting the update information received from a first node to a second node.

The update controller of the control node may transmit the update information received from the first node to the second node at a plurality of predetermined times.

When the second node receives the update information from the control node, the update manager of the second node may update the information stored in the storage based on the update information received.

In the second node, the update manager may determine whether the update time of the update information received is later than an updated time of the information currently stored in the storage, and when the update time of the update information received is later than an updated time of the information currently stored in the storage, the update manager may use the identification information to request transfer of an updated minimum unit of the information from the control node.

According to further another aspect of the present invention, the control node may include: an information storage for storing the information stored in the storage of each of the nodes; an information manager for managing the information for each of the nodes and an update time thereof; a update information receiver for receiving an update information from a first node at which an update of the information occurs; and an update controller for selecting a second node having the update time of the information stored therein, which is later than the update time included in the update information received from the first node, and transmitting the updated minimum unit of the information identified by the identification information included in the update information received from the first node, to the second node.

The present invention is applicable to a structured document processing system comprising a network composed of a server device and a plurality of client devices, the server device storing a structured document composed of a plurality of elements which are hierarchically structured, each of the elements being a constituent unit of the structured document, and each of the client devices storing a duplication of the structured document. The server device includes: an update manager for managing an update of the structured document using an updated minimum element of the structured document, the updated minimum element including an updated portion of the structured document.

According to still another aspect of the present invention, an information management method in a system comprising a plurality of nodes connected to each other via a network, the method includes the steps of: at each of the plurality of nodes, a) storing information to be shared among the plurality of nodes in a storage; and b) managing an update of the information using an updated minimum unit of the information, the updated minimum unit including an updated portion of the information.

According to further another aspect of the present invention, a structured document updating method in a network composed of a server device and a plurality of client devices, the server device storing a structured document composed of a plurality of elements which are hierarchically structured, each of the elements being a constituent unit of the structured document, and each of the client devices storing a duplication of the structured document, the method includes the steps of: at the server device, a) managing an update of the structured document using an updated minimum element of the structured document, the updated minimum element including an updated portion of the structured document; and b) notifying the client devices on the network that the structured document is updated when a part of the structured document has been changed.

The information management method/system and the structured document updating method/system can be implemented by respective ones of computer programs running on a program-controlled processor.
FIG. 1 is a diagram showing a general system configuration for accessing a server device on a network from a portable terminal;
FIG. 2 is a block diagram showing the configuration of a first embodiment according to the present invention;
FIG. 3 is a configuration diagram showing a structure of a structured document;
FIG. 4 is a configuration diagram showing a structure of a structured document;
FIG. 5 is a configuration diagram showing a structure of a structured document;
FIG. 6 is a sequence chart showing a communication sequence;
FIG. 7 is a diagram showing a deck and cards;
FIG. 8 is a block diagram showing the configuration of a second embodiment according to the present invention;
FIG. 9 is a sequence chart showing a communication sequence;
FIG. 10 is a sequence chart showing a communication sequence;
FIG. 11 is a block diagram showing the configuration of a third embodiment according to the present invention;
FIG. 12 is a diagram showing the configuration of elements E of a document F for managing element update time;
FIG. 13 is a diagram showing an example of node update time; and
FIGS. 14 is a block diagram showing the configuration of a fourth embodiment according to the present invention.

### FIRST EMBODIMENT

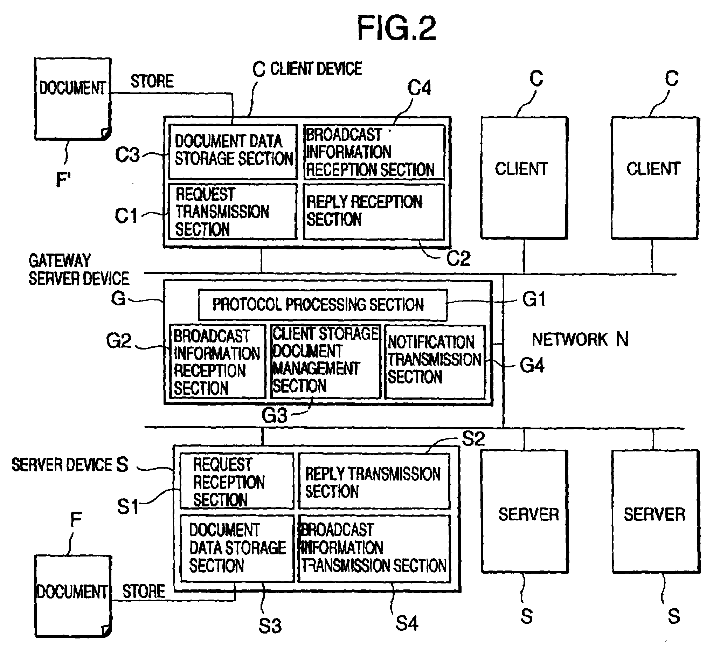

Referring to FIG. 2, a system according to a first embodiment of the present invention includes at least two document processing devices and a gateway server device G, which are connected to each other by a network N. The gateway server device G executes, as a proxy, protocol processing between a document processing device serving as a client device C and another document processing device serving as a server device S.

The document processing devices includes a server device S that stores a source document and a client device C that stores a duplication of the document acquired from the server device S. The document processing device serving as the client device C and the document processing device serving as the server device S are determined from document to document. However, a document processing device may always function as the server device S, or may always function as the client device C.

As shown in FIG. 2, the client device C includes a request transmission section C1, a reply reception section C2, and a broadcast information reception section C4, serving as interface means to the network N, and a document data storage section C3 for storing document information.

The request transmission section C1 is a function section for transmitting a request for document transmission or the like to the server device S. The reply reception section C2 is a function section for receiving a reply from the server device S. The broadcast information reception section C4 is a function section for receiving information broadcasted by the server device S and comparing update time of a document contained in received update information with already stored update time of the document. The document data storage section C3 is a function section for preserving information of a document or the like sent from the server device S.

Furthermore, as shown in FIG. 2, the server device S includes a request reception section S1, an reply transmission section S2, and a broadcast information transmission section S4, serving as interface means to the network N, and a document data storage section S3 for storing document information.

The request reception section S1 is a function section for receiving a request for document transmission or the like from the client device C. The reply transmission section S2 transmits a reply (such as a stored document or the like) to a request issued by the client device C to the client device C. The broadcast information transmission section S4 notifies (broadcasts) all document processing devices existing on the network N that a document stored by itself has been updated. The document data storage section S3 stores and manages a document.

A document F stored in the document data storage section S3 is stored in the document data storage section C3 of the client device as a duplication document F'.

The gateway server device G includes a protocol processing section G1, a broadcast information reception section G2, a client document management section G3, and a broadcast information transmission section G4.

The protocol processing section G1 has a function of relaying a request issued by the client device C to the server device S, and relaying a reply received from the server device S to the client device C. In other words, in the case where the client device C is a radio portable terminal and the server device exists on the network, the protocol processing section G1 conducts protocol conversion between, for example, the communication protocol of the WAP and the standard protocol in the network. The broadcast information reception section G2 receives update information broadcasted by the server device S.

The client storage document management section G3 monitors a document transferred between the client device C and the server device S, on the basis of specifications of the document data storage section C3 of the client device C, and thereby simulates the state (such as available storage capacity) of the document data storage section of the client device C. Furthermore, the client storage document management section G3 manages the client device C as to a duplication of which document data is stored in the client device C.

On the basis of management information of the client storage document management section G3, the broadcast information transmission section G4 transmits update information of an element E of the document F to the client device C which stores a duplication document F' of the document F stored in the server device S.

Next, a structured document to which the present embodiment having the above-described configuration is applied will now be described.

A document to which the present embodiment is applied is a structured document of HTML (HyperText Markup Language), SGML (Standard Generalized Markup Language), XML (Extensible Markup Language), WML (Wireless Markup Language), or the like.

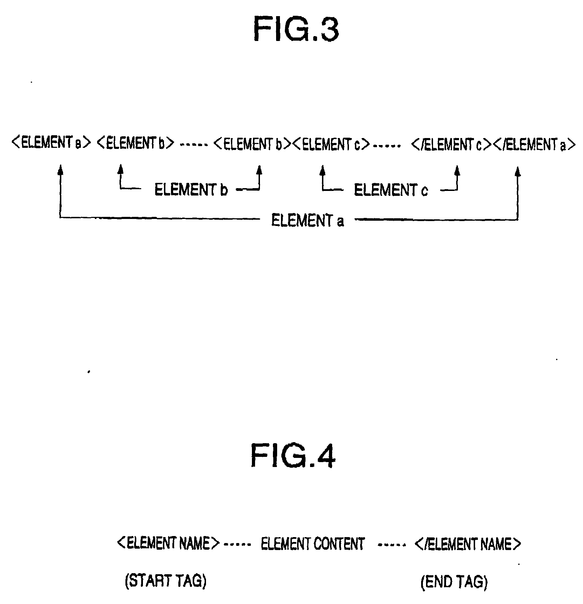

As shown in Fig. 3, in the structured document, elements serving as units of document parts are hierarchically formed. Each element is represented by using tags that are marks for identifying an element.

As shown in FIG. 4, one element is formed of a start tag for representing its element name, contents of the element, and an end tag for representing an end of the element. Each of components forming an element is called a node.

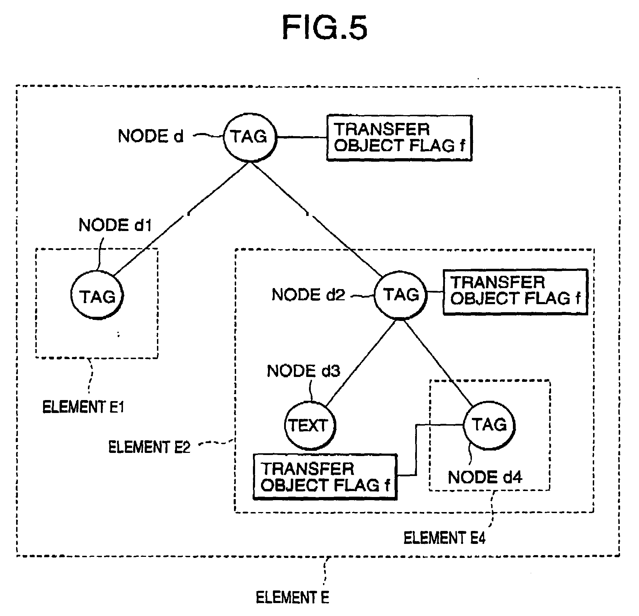

As shown in FIG. 5, an element has a node tree structure having a tag node as the top. For example, in the hierarchical structure of an element E, the element E has a tag node d as the top. The tag node d has child nodes d1 and d2. The child node d2 has its child nodes d3 and d4.

Furthermore, among node trees of the element E, each partial node tree having a tag node as the top also forms an element. For example, as shown in FIG. 5, an element E1 is formed of a node tree having the tag node d1 as the top. An element E2 is formed of a node tree having the tag node d2 as the top. An element E4 is formed of a node tree having the tag node d4 as the top.

In such a system that a duplication of a document stored in a document processing device existing on a network is held by another document processing device, it is now assumed that a part of a structured document stored in a document processing device has been updated. A first purpose of the present embodiment having the above-described configuration is to conduct information update management in an element that is a minimum constituent unit to form a structured document and includes that updated part.

In the case where a document held by a document processing device has been updated, a second purpose is to notify another document processing device or gateway server device existing on the network that the document has been updated.

Assuming that a part of a structured document stored in a document storage device has been updated, a third purpose is to transmit in this case a minimum element forming the structured document and containing the updated portion to another document processing device storing the same structured document.

In order to achieve the first purpose, when one of the nodes forming an element of the document has been updated, a transfer object flag f is added to the top node of a minimum element containing the updated node, in the present embodiment. In this case, the transfer object flag f is provided as an attribute value of a node tag. Furthermore, update time may be described in a header field of the document. Update time may be managed by using a different file. Alternatively, update time may be managed as external meta information which is information accompanying the document. In documents of the XML format, it is also possible to use RDF (Resource Description Framework).

When a node that is a part of a document is updated, therefore, only an element containing the updated node can be transferred instead of the whole of the document. As a result, the amount of transferred data and the time required for data transfer can be reduced, taking some of the load off the network.

In order to achieve the second purpose, the broadcast information transmission section S4 is provided in the server device. When a document stored in the server device is altered, the broadcast information transmission section S4 broadcasts update information to the network to notify other document processing devices that the document has been updated.

In order to achieve the third purpose, a minimum element forming the structured document and containing the updated portion is identified by using the transfer object flag f. The minimum element thus identified is transmitted by the reply transmission section S2.

### Operation

An example of an operation in the above-described configuration will now be described.

A request transmitted by the client device C is received by the gateway server device G and the gateway server device G transmits the request received from the client device C to the server device S.

A request issued by the client device C to the server device S is processed as described hereafter. When the client device C has transmitted a request from its request transmission section C1 and the server device S existing on the network has received the request via the gateway server device G, the server device S conducts processing in its document data storage section S3 depending on the contents of the request received at the request reception section S1, and transmits an reply to the received request to the client device C from the reply transmission section S2 via the gateway server device G.

If the request transmitted by the client device C is to transfer document data, then the server device S reads a necessary document F from the document storage section S3, and transmits the document F to the client device C as a reply to the request.

If the request transmitted by the client device C is to store document data carried thereby, then the server device S stores the document data F contained in the request received from the client device C, in the document data storage section S3.

In the case where a node of the document F is updated in the server device S, an element that is a transfer object (i.e., an element to be transferred) is determined in the document data storage section S3 of the server device S. As described above, the transfer object flag f is attached to the top node of the element to be transferred. By referring to the transfer object flag f, therefore, the document data storage section S3 determines an element to be transferred.

With reference to FIG. 5, if the node d1 has been updated, then a minimum element E to be transferred, among elements containing the node d1, is determined as a transfer object. If the node d3 has been updated, then a minimum element E2 to be transferred, among elements containing the node d3, determined as a transfer object.

As an example, it is now assumed that the node d1 is updated and the element E is determined as a transfer object. Immediately after the element E is determined as a transfer object, update information of the element E is broadcasted by the broadcast information transmission section S4 to other data processing devices via the network N.

Upon receiving update information of the element E of the document F at the broadcast information reception section G2, the gateway server device G simulates the state of the document data storage section C3 of each client device C in the client storage document management section G3, and transmits update information of the element E of the document F to the client devices C that stores a duplication document F' of the document F, by using the notification transmission section G4.

Upon receiving the update information of the element E of the document F from the gateway server device G, the client device C examines whether a duplication document F' of the document F exists in the document data storage section C3. If the duplication document F' of the document F exists, then the client device C transmits a data request for the element E of the document F from the request transmission section C1 to the server device S via the gateway server device G.

Upon receiving the data request at the request receiving section S1 from a client server device C, the server S reads the requested element E of the document F from the document data storage section S3, and transmits the requested element E from the reply transmission section S2 to the client device C as the data request source via the gateway server device G.

Upon receiving the element E of the document F at the reply reception section C2, the client device C updates the element E of the document F' stored in the document data storage section C3.

If a node of the duplication document F' is updated in the client device C, then a minimum element including the updated node is determined as a transfer object as the case of update of the document in the server device S.

More specifically, for example, if the node d3 as shown in FIG. 5 is updated, the element E2 is determined as a transfer object. When the element E2 is determined as an element to be transferred, the client device C transmits a storage request of the element E of the document F from the request transmission section C1 to the server device S via the gateway server device G. In accordance with the document storage request received by the request transmission section S1, the server S updates the element E2 of the document F.

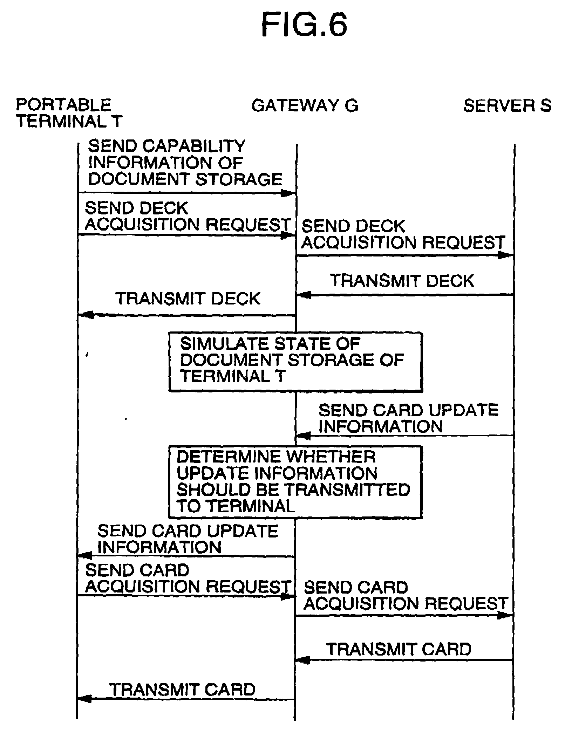

By referring to FIG. 6, an example of communication conducted when the portable terminal T serving as a client device C accesses the server device S existing on the Internet will now be described.

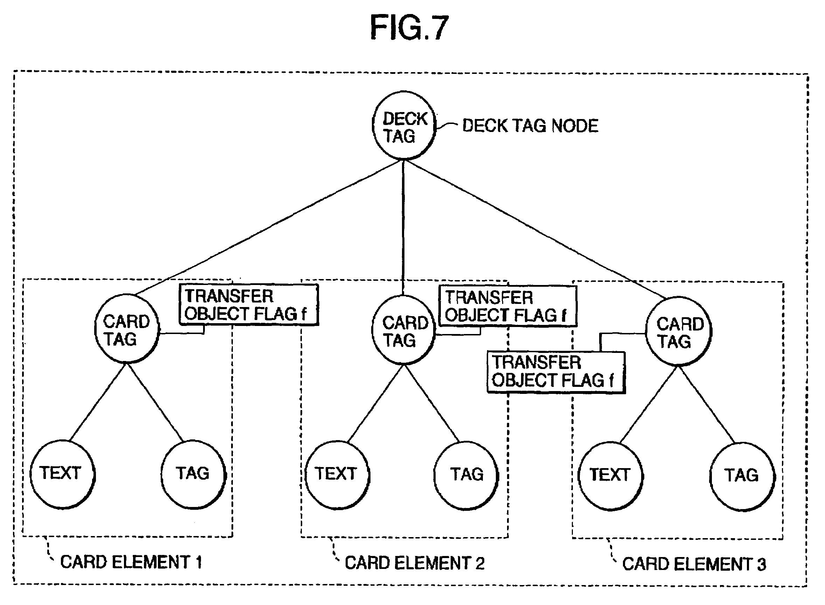

In this case, WAP (Wireless Application Protocol) is used as a communication protocol between the portable terminal T and the gateway server device G. Furthermore, it is now assumed that both a document stored in the server device S and a document stored in the portable terminal T are of the WML (Wireless Markup Language) format. As described earlier, in a document of the WML format, there are concepts called "deck" and "card". The "deck" corresponds to one page of the document, and the "card" is the unit of displayable data that can be presented on the display of the portable terminal T. The "deck" and "card" also have a document structure as shown in FIG. 7.

First, the portable terminal T notifies the gateway server device G of the capability information of the document data storage section of itself. Here, the capability information represents the storage capacity of the document data storage section of the portable terminal T.

Upon receiving this notification of the capability information from each portable terminal T, the gateway server device G registers the capability information of each portable terminal T in the client document management section G3.

Subsequently, an acquisition request of a deck is sent from the portable terminal T to the server device S on the network. This access to the server device S can be performed by the portable terminal T accessing the gateway server device G at the telephone number thereof because the deck acquisition request contains the address information of the server device S existing on the network.

Upon receiving this deck acquisition request from the gateway server device G, the server device S transmits an reply containing address information identifying the portable terminal T as the request source to the gateway server device G. As a result, the deck is transmitted to the portable terminal T as the request source via the gateway server device G.

At this time, the client storage document management section G3 of the gateway server device G manages document information stored in the document data storage section C3 of the portable terminal T, such as information representing a document stored in each portable terminal T and update time of the stored document.

Subsequently, when a part of a document F stored in the server device S is updated, the server device S notifies the gateway server device G of the card update information.

The gateway server device G simulates the state of the document data storage section of each portable terminal T, and selects a portable terminal T which should be notified of the update information of the document F. The gateway server device G then notifies the selected portable terminal T of the update information received from the server device S.

Upon being notified of the update information, the portable terminal T transmits an acquisition request (including the destination address information of the server device S) for card data to the gateway server device G. The gateway server device G in turn transmits the acquisition request for the card data to the server device S that is a destination of the acquisition request.

Upon receiving the acquisition request, the server device transmits the requested card to the portable terminal T via the gateway server device G.

As described above, according to the first embodiment, when a node that is a part of a document is updated, it is possible to transmit only an element which is a part (or a card in the case of a document having the WML format) containing the updated node instead of the whole of the document. As a result, the amount of transferred data and the time required for data transfer of the document can be reduced and accordingly the load of the network can be decreased.

Furthermore, the gateway server device G can filter document data update information broadcasted from the server device S and transmit the update information to only the client device C that holds the same document. Therefore, the amount of data transferred between the gateway device and the client device C can be reduced.

### SECOND EMBODIMENT

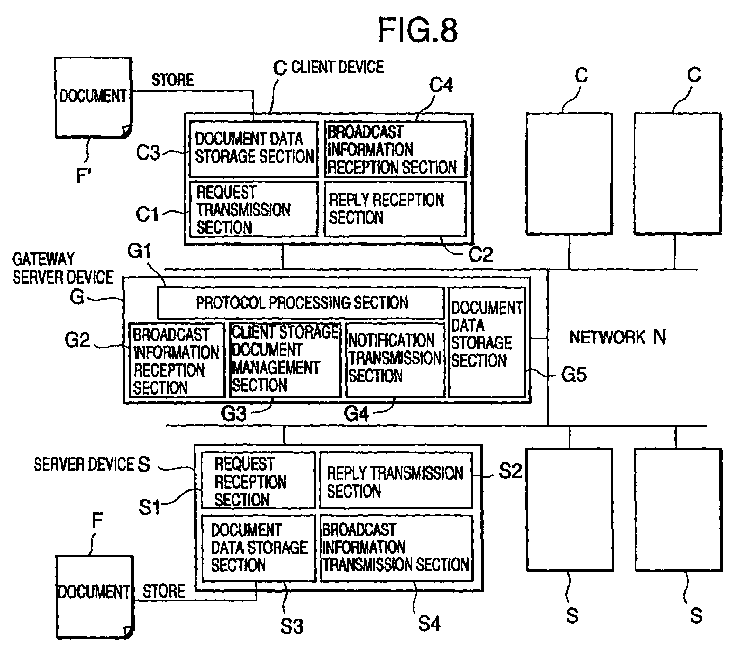

Referring to FIG. 8, a second embodiment according to the present invention will now be described. The feature of the second embodiment is such that the gateway server device G includes a document data storage section G5.

The document data storage device G5 included in the gateway server device G duplicates a document F transferred from the server device S to the client device C, and stores the duplicated document therein.

Upon reception of a request for acquisition of a document F held by the server device S from the client device, the gateway server device G of the present embodiment searches the document data storage section G5 for a duplication of the requested document F. If the duplication of the document F is found, then the gateway server device G sends it back to the client device C. If such a duplication of the requested document F is not found, then the gateway server device G relays the acquisition request to the server device S. Upon receiving a duplication of the document F from the server device S as a response to the acquisition request, the gateway server device G transfers it to the client device C. Furthermore, the gateway server device G stores the duplication of the document F received from the server device S in the document data storage section G5.

If the gateway server device G has received update information of an element E of the document F from the server device S at the broadcast information reception section G2 and there is a duplication of the document F in the document data storage section G5, then the gateway server device G transmits an acquisition request for the element E of the document F to the server device S. When receiving the element E of the document F from the server device S, the gateway server device G replaces the corresponding data stored in the document data storage section G5 with the data of the updated element E of the document F received from the server device S. Furthermore, from simulation information obtained in the client storage document management section G3, the gateway server device G identifies a client device C storing the document F associated with the update information received from the server S, and notifies the client device C, by the broadcast information transmission section G4, of the update information of the element E of the document F received from the server device S.

If a duplication of the document F is not found in the document data storage section G5, then the gateway server device G identifies, based on the simulated information obtained in the client storage document management section G3, a client device C storing the document F associated with the update information received from the server device S. If a client device C storing the document F associated with the update information received from the server device S does not exist, then this processing is skipped. If there is at least one client device C storing the document associated with the update information received from the server device, then the gateway server device G transmits an acquisition request of the document F to the server device S and newly stores the updated document F in the document data storage section G5. Furthermore, the gateway server device G notifies the identified client device C of the update information of the element E of the document F of the server device S from the broadcast information transmission section G4.

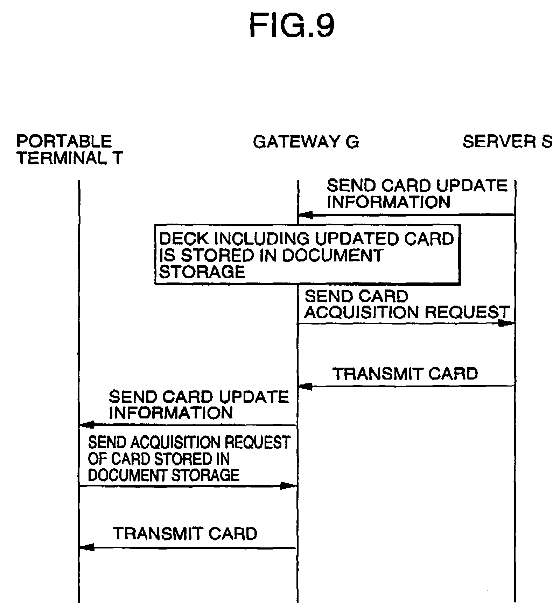

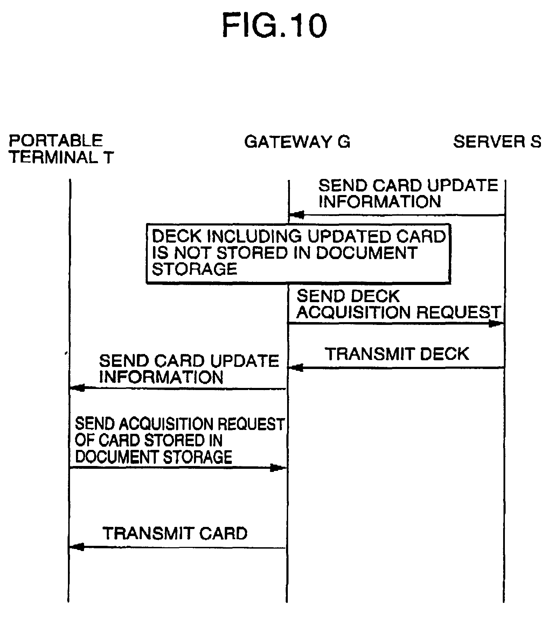

By referring to FIGS. 9 and 10, an example of communication conducted when the portable terminal T serving as the client device C accesses the server device S existing on the Internet will now be described.

In this case as well, WAP is used as the communication protocol between the portable terminal and the gateway server device. Furthermore, it is now assumed that a document stored in the server device S and a document stored in the portable terminal T serving as the client device are of the WML format.

When a card of a document stored in the document data storage section S3 of the server device S is updated, the server device S notifies the gateway server device G of the card update information.

As shown in FIG. 9, if the gateway server device G has received card update information from the server device S at the broadcast information reception section G2 and there is a duplication of the corresponding deck in the document data storage section G5, then the gateway server device G transmits an acquisition request for the card of the deck to the server device S. When receiving the card of the deck from the server device S, the gateway server device G replaces the corresponding data stored in the document data storage section G5 with the card of the deck received from the server device S. Furthermore, from simulation information obtained in the client storage document management section G3, the gateway server device G identifies a portable terminal T storing the document F associated with the card update information received from the server S, and notifies the portable terminal T, from the broadcast information transmission section G4, of the update information of the card received from the server device S.

As shown in FIG. 10, if there is not a duplication of the deck in the document data storage section G5 of the gateway server device G, then the gateway server device G identifies a portable terminal T storing the deck associated with the card update information received from the server device S from the simulated information in the client storage document management section G3. If there is at least one portable terminal T storing the deck associated with the card update information received from the server device S, then the gateway server device G transmits an acquisition request for the deck to the server device S and newly stores the received deck in the document data storage section G5. Furthermore, the gateway server device G notifies the identified portable terminal T of the update information of the deck card of the server device S from the broadcast information transmission section G4, and transmits the card to the portable terminal T for the acquisition request.

In the second embodiment as described above, the gateway server device G stoes the duplication of the document held by the server device S. As a result, it is possible to prevent such inconvenience that an acquisition request for the same document and document data are transferred between the gateway server device G and the server device S several times. In addition, the amount of data transferred between the gateway server device G and the server device S can be reduced.

In the second embodiment, the gateway server device G transmits update information received from the server device S to the client device C. However, the gateway device G may manage update time of the document stored by each client device C, and transfer an element of the document directly to a client device that stores a document having an update time older than the update time contained in the update information received from the server device S.

### THIRD EMBODIMENT

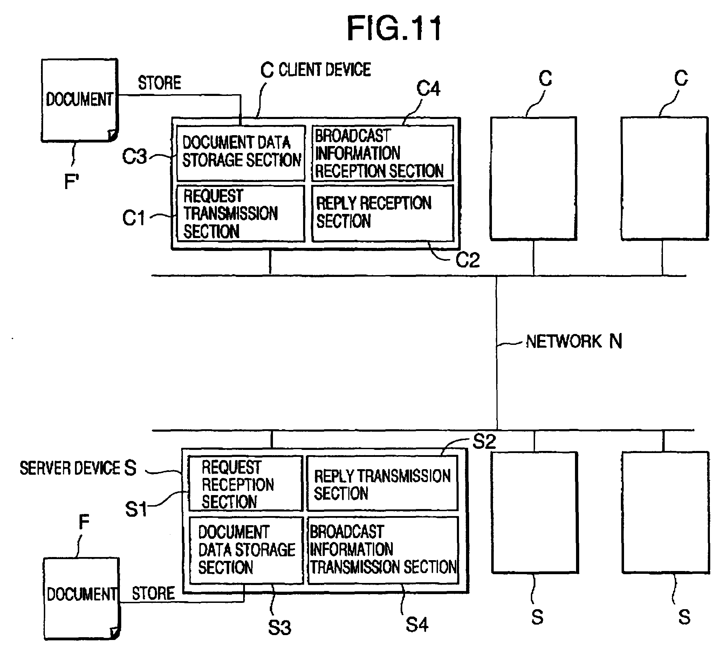

By referring to FIG. 11, a third embodiment according to the present invention will now be described.

As shown in FIG. 11, the present embodiment has no gateway server device on the network N, which is provided in the above-described first and second embodiments. In other words, the present embodiment provides direct communication between the server device S and the client device C using one communication protocol.

A request transmitted by the client device C to the server device S is processed as hereafter described. If the client device C transmits a request from the request transmission section C1 to the server device S via the network N, then the server device S conducts processing in the document data storage section S3 on the basis of the request received by the request reception section S1, and transmits an reply to the request from the reply transmission section S2 to the client device C via the network N.

If the request transmitted by the client device C to the server device S is storage of document data, then the server device S stores the document data F contained in the request received from the client device C, in the document data storage section S3.

If a node of the document F is updated in the server device S, then an element including the updated node is determined as a transfer object in the document data storage section of the server device S. The transfer object flag f is attached to the top node of the element to be transferred.

As an example, it is now assumed that the node d1 is updated and the element E becomes a transfer object. When the element E is determined as a transfer object, update information of the element E is immediately broadcasted from the broadcast information transmission section S4 via the network N.

Upon receiving the update information of the element E of the document F at the broadcast information reception section C4, the client device C determines whether a duplication document F' of the document F exists in the document data storage section C3. If the duplication document F' of the document F exists, then the client device C transmits a request for the element E of the document F from the request transmission section C1 to the server device S via the network N.

Upon receiving the request at the request receiving section S1, the server device S reads the requested element E of the document F from the document data storage section S3, and transmits the element E from the reply transmission section S2 to the client device C as a transmission request source via the network N.

Upon receiving the element E of the document F at the reply reception section C2, the client device C updates the element E of the document F' stored in the document data storage section C3 by replacing it with the received element E.

If a node of the duplication document F' of the document F is updated in the client device C, then an element is determined as a transfer object similarly to the case of update of the document in the server device S. For example, if the node d3 as shown in FIG. 3 is updated, then the element E2 is determined as a transfer object. When the element E2 is determined as an element to be transferred, the client device C transmits a storage request of the element E2 of the document F from the request transmission section C1 to the server device S via the network N. In accordance with the document storage request received by the request transmission section S1, the server device S updates the corresponding element E2 of the document F.

When a node that is a part of a document is updated, only an element which is a part containing the updated node is transmitted instead of the whole of the document, as described above. As a result, the amount of transferred data and the time required for data transfer can be reduced, and therefore the load of the network becomes smaller.

### FOURTH EMBODIMENT

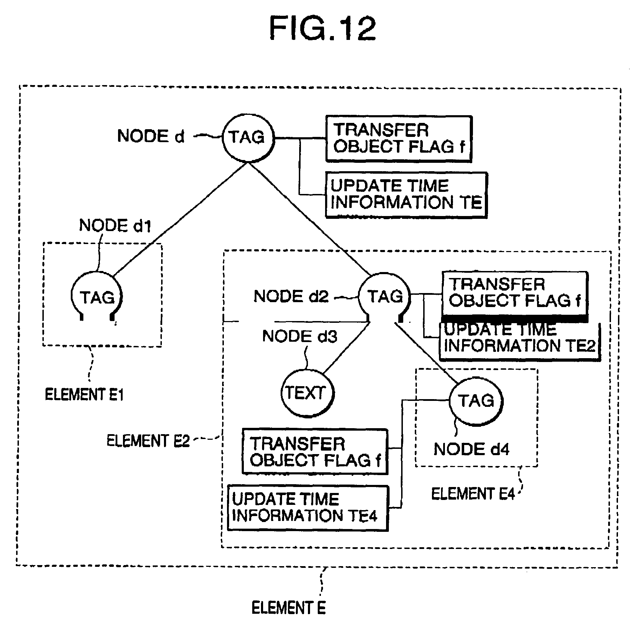

By referring to FIGS. 12 to 14, a fourth embodiment of the present invention will now be described.

In the first to third embodiments, the timing of update information transmission to the client device C is restricted to a time when update has been conducted.

According to the present embodiment, the timing of update information notification is not restricted to the time when update has been conducted, but update information is transmitted at arbitrary time intervals in a predetermined time period. Accordingly, even if a failure occurs in the network between the server device and the client device when update has occurred, it becomes possible to convey the update information to the client device C.

In the present embodiment, the timing of update information transfer is different from the timing of document update. Therefore, it is necessary to manage the update times of elements that may be determined as a transfer object, element by element.

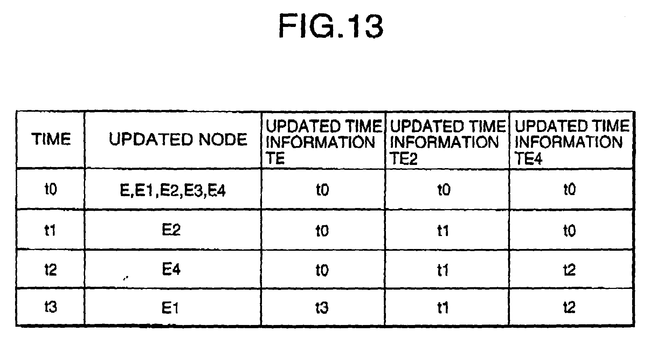

By referring to FIGS. 12 and 13, a method for managing the node update time information for each element will now be described.

As shown in FIG. 12, in the update time information management, the tag nodes d, d2 and d4 which are top nodes of the elements which may be determined as a transfer object have update time information TE, TE2 and TE4 besides the transfer object flags attached therewith, respectively.

As shown in FIG. 12 and FIG. 13, it is now assumed that nodes d, d1, d2, d3 and d4 have been generated at time t0. The tag node d has the generation time t0 as update time information TE. In the same way, the tag node d1 has the generation time t0 as update time information TE1. The tag node d2 has the generation time t0 as update time information TE2. The tag node d4 has the generation time t0 as update time information TE4.

If the node d3 is updated at time t1 later than the time t0, then a minimum element E2 which is determined as a transfer object among elements including the node d3 is considered to have been updated, and the update time information TE2 held by the top node d2 of the element E2 is changed to the time t1.

Furthermore, if the node d4 is updated at time t2 later than the time t1, then a minimum element E4 which is determined as a transfer object among elements including the node d4 is considered to have been updated, and the update time information TE4 held by the top node d4 of the element E4 is changed to the time t2.

Furthermore, if the node d1 is updated at time t3 later than the time t2, then a minimum element E which is determined as a transfer object among elements including the node d1 is considered to have been updated, and the update time information TE4 held by the top node d of the element E is changed to the time t3.

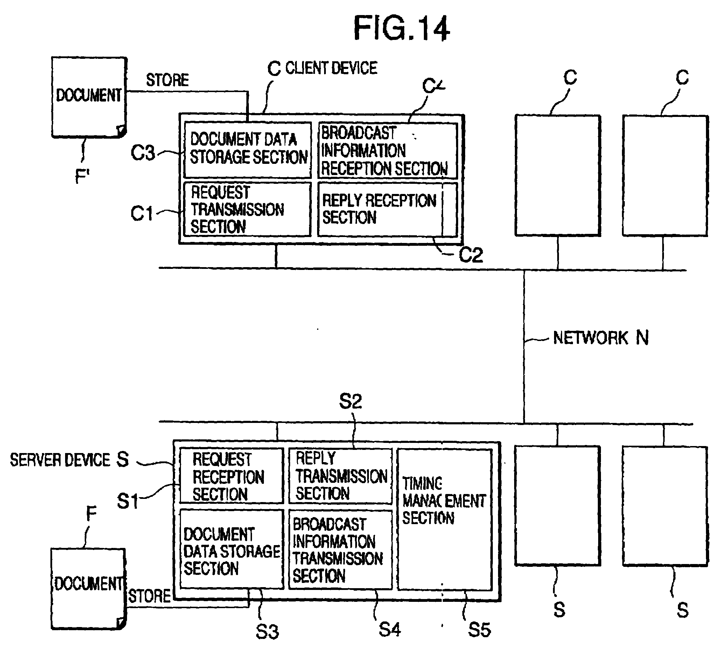

As shown in FIG. 14, the server device S includes a timing management section S5. The timing management section S5 manages update information recorded in the top tag nodes of the above-described elements, and outputs the timing of the update information of an element to the broadcast information transmission section S4.

In accordance with an instruction from the timing management section S5, update information of each element is periodically broadcasted from the broadcast information transmission section S4 for a fixed time period. The update information includes an element identifier and update time information.

Upon receiving the update information of the element E of the document F, for example, the client device C compares update time of a duplication document F' of the document F stored in the document data storage section with update time information TE of the element contained in the update information received from the server device S. If the update time information TE of the element E contained in the update information is later than the stored update time, then the client device C transmits an acquisition request for the element E of the document F.

Even if the same update information for the same element is received plural times, it becomes unnecessary to conduct update repeatedly once update is effected.

In the present embodiment, the server device S includes the timing management section S5. In the case where the gateway server device G is provided as in the first and second embodiments, the gateway server device G may include the timing management section.

In the present embodiment, update information of the document F is transmitted from the server device S or the gateway server device G to the client device C at arbitrary time intervals. Even if a failure occurs in the network between the client device and the server device or the gateway server device when update has occurred, therefore, it is possible to notify the client device C of the update information.

The above-described embodiments are preferred embodiments of the present invention. However, the present invention is not limited to them. Various modifications can be effected without departing from the spirit of the present invention.

For example, in the above-described embodiments, information stored in the document processing device is assumed to be a structured document. However, the information may be moving picture information. In this case, when moving picture information has been altered, a start point and an end point of an alteration of the moving picture information are managed as a pair in a storage device for storing the moving picture information.

Furthermore, the above-described embodiments have been described by taking the data transfer from the server device to the client device as an example. However, the above-described embodiments can be implemented in the data transfer between the client devices as well. This is made possible by providing the client device C with the function of the server device S.

Furthermore, in the above-described second embodiment, the document data storage section G5 of the client device G stores the whole of a document. However, the document data storage section G5 may store only updated elements. In this case, it is necessary to hold elements of a document stored in the document data storage section G5 until all client devices C storing the document to be updated have received the updated document, by means of the management of the client storage document management section G3.

Furthermore, the document data storage section of each of the client device C and the server device S or the gateway server device G may include a version information management section for managing version information of a document. In this case, the version information management section of the server device S side has a locking function of preventing update of a document until all client devices C that store the same document to be updated have completed the update of the document. In addition, the version information management section of the client device C side manages the version information of a document the client device C holds.

Furthermore, the client device C may include a controller that controls such that an element of a document received in units of an element is combined with a document held in the document data storage section and the combined data is displayed on a display section.

Furthermore, in the above-described embodiments, update information is transferred from the server device to the client device, and the server device transmits an updated document element to a client device that has transmitted a document transfer request. When a document has been updated, however, an updated document element may be directly transmitted without notifying the client device of the update information.

In the above-described embodiments, a recording medium having an updating program stored thereon may be installed in each of devices as described above. As such a recording medium, a semiconductor memory, an optical disk, an optomagnetic disk, a magnetic recording medium, or the like may be used.

As described above, according to the present invention, when a part of information stored in a storage device has been updated, it is made possible to conduct information update management in units of a minimum constituent of the information including the updated portion thereof. For example, it is possible to transmit only the minimum unit including the updated portion to another storage device which stores the same information and rewrite the information. In other words, when a part of information has been updated, a minimum constituent unit of the information including the updated portion can be transferred without transferring the whole information. Therefore, the amount of transferred information and the time required for data transfer can be reduced, taking some of the load off the network.

Furthermore, notifying or broadcasting means for notifying other devices on the network of occurrence of information update is provided in a storage device. As a result, it is possible to make all other storage devices storing the same information recognize that the information has been updated. Therefore, updating the information can be conducted rapidly within the network.

Furthermore, by making update information broadcasted by a storage device include information concerning its update time, it becomes possible for another storage device to recognize the time when the information has been updated. For example, even if the same update information is received, it is avoided to repeat the same update processing twice.

Furthermore, a change to the information is managed in a minimum unit including the changed portion, together with the update time. In addition, update information broadcasted by a storage device may include information identifying a minimum unit including the updated portion and information concerning the update time thereof. As a result, it is possible to recognize when a change was conducted for each of constituents of the information.

At predetermined time intervals, the notifying means notifies another device of information updating for a predetermined time period. Even if a channel to another storage device is impaired when update has occurred, it is possible to notify the other storage device of update information.

Furthermore, when a part of stored information is altered, a storage device notifies a control device for managing information stored in respective storage devices that information has been updated. The control device can notify only a storage device storing the same information that the information has been updated. As a result, the control device can filter the update information transferred from the storage device and transmit the update information to only a storage device that needs the updated information. Therefore, the amount of data transferred between the control device and the storage devices can be reduced.

Furthermore, when a part of stored information is altered, the storage device transmits update information and a minimum unit of information including the updated portion to a control device for managing information stored in respective storage devices. The control device stores the same information as the information stored in respective storage devices. As a result, it is possible to prevent an acquisition request for the same information and information data from being transferred between a storage device and the control device plural times. Therefore, the amount of data transferred between the storage device and the control device can be reduced.

Furthermore, when a part of stored information is altered, the storage device notifies a control device of update information including update time of information and a minimum unit of information including the updated portion. The control device stores information that are stored in respective storage devices, and manages the information stored in respective storage devices and update time of the information, and transfers a minimum unit of information including the updated portion transferred from a storage device to another storage device which stores the information having update time older than update time transferred from the storage device. As a result, the amount of data transferred between the control device and another storage device can be reduced.

When a part of a document stored in a server device has been updated, the structured document processing system according to the present invention makes it possible to conduct update management in a minimum element of the document including the updated portion. For example, it is possible to transmit only the element including the updated portion to a client device storing the same document and to update the document stored in the client device.

Furthermore, in the case where a part of a document stored in a server device has been updated, a minimum element of the document including the updated portion is transmitted to another device storing the same document. When a part of a document has been updated, therefore, a minimum constituent element of the document including the updated portion can be transferred without transferring the whole document. Therefore, the amount of transferred data and the time required for transfer of a structured document can be reduced, and the load of the network can be decreased.

Furthermore, a notifying or broadcasting means for notifying another device existing on the network that the document has been updated is provided in a server device. As a result, it is possible to make all client devices storing the same document recognize that the document has been updated. Therefore, alteration of a document can be conducted rapidly in the network.

Furthermore, update information received from a server device including information concerning update time of a document allows a client device to recognize the time when the document has been altered. For example, even if the same update information is received concurrently, it is avoided to repeat the same update processing twice.

Furthermore, alteration of a document is managed in a minimum element including the alteration portion, together with the update time. In addition, update information received from a server device includes information identifying a minimum element including an alteration portion of the document and information concerning the update time of the minimum element. As a result, it is possible to recognize when alteration was conducted for each of elements of the document.

At predetermined time intervals, a notifying or broadcasting means notifies a client device of update information. Even if a connection between the server device and the client device is impaired when update has occurred, it is possible to notify the client device of update information with reliability.

Furthermore, when a part of a stored document is altered, a server device notifies a gateway server device of update information indicating that information has been updated. The gateway server device that manages information stored in respective client devices notifies a client device which stores the document that the information has been updated. As a result, the gateway server device can filter the update information received from the server device and transmit the update information to only a client device holding the information that needs the altered document. Therefore, the amount of data transferred between the gateway server device and the client device can be reduced.

Furthermore, when a part of a stored document is altered, the server device notifies a gateway server device of update information indicating that information has been updated and a minimum element of a document including the updated portion. The gateway server device for managing documents stored in respective client devices also stores the document stored in the server device. As a result, it is possible to prevent an acquisition request for the same document and document data from being transferred between the server device and the gateway server device a plurality of times. Therefore, the amount of data transferred between the server device and the gateway server device can be reduced.

Furthermore, when a part of a stored document is altered, the server device notifies a gateway server device of update information including update time of information and a minimum element of a document including the updated portion. The gateway server device which stores documents stored in respective client devices manages documents stored in respective server devices and update time of the documents, and transfers a minimum element of a document including the updated portion received from a server device to a client device which stores a document having update time older than update time transferred from the server device. As a result, the amount of data transferred between the gateway server device and the client device can be reduced.

## Claims

1. An information management system comprising a plurality of nodes connected to each other via a network, wherein each of the plurality of nodes (C, S) comprises:
a storage (C3, S3) for storing information to be shared among the plurality of nodes; and
characterized by
an update manager (C1, C2, C4, S1, S2, S4) for managing an update of the information using an updated minimum unit of the information, the updated minimum unit including an updated portion of the information.

2. The information management system according to claim 1, wherein, when an update occurs at the node, the update manager transmits an updated minimum unit of the information to another node.

3. The information management system according to claim 1, wherein, when an update occurs at the node, the update manager transmits update information to another node, the update information including identification information identifying an updated minimum unit of the information.

4. The information management system according to claim 2, wherein, when receiving an updated minimum unit of the information from another node, the update manager updates a corresponding minimum unit of the information stored in the storage using the updated minimum unit received.

5. The information management system according to claim 1, wherein the information comprises a plurality of elements which are hierarchically structured, wherein a minimum element including the updated portion of the information is determined as the updated minimum unit.

6. The information management system according to claim 1, wherein the update manager manages the update of the information using an update time at which the update of the information occurs,
wherein, when an update occurs at the node, the update manager transmits update information to another node, the update information including the update time.

7. The information management system according to claim 6, wherein, when receiving the update information from another node, the update manager updates the information stored in the storage based on the update information received.

8. The information management system according to claim 7, wherein
the update manager determines whether the update time of the update information received is later than an updated time of the information currently stored in the storage, and
when the update time of the update information received is later than an updated time of the information currently stored in the storage, the update manager requests transfer of an updated minimum unit of the information.

9. The information management system according to claim 1, wherein, when an update occurs at the node, the update manager transmits an updated minimum unit of the information to another node at a plurality of predetermined times.

10. The information management system according to claim 1, wherein, when an update occurs at the node, the update manager transmits update information to another node at a plurality of predetermined times, the update information including identification information identifying an updated minimum unit of the information.

11. The information management system according to claim 10, wherein the update manager manages the update of the information using an update time at which the update of the information occurs, the update information further includes the update time.

12. The information management system according to claim 3, further comprising a control node (G) for controlling communications between the nodes on the network,
the control node comprising:
an information manager for managing the information stored in the storage for each of the nodes;
an update information receiver for receiving an update information from a first node at which an update of the information occurs; and
an update controller for transmitting the update information received from a first node to a second node.

13. The information management system according to claim 12, wherein the update controller of the control node transmits the update information received from the first node to the second node at a plurality of predetermined times.

14. The information management system according to claim 12, wherein, when the second node receives the update information from the control node, the update manager of the second node updates the information stored in the storage based on the update information received.

15. The information management system according to claim 14, wherein, in the second node,
the update manager determines whether the update time of the update information received is later than an updated time of the information currently stored in the storage, and
when the update time of the update information received is later than an updated time of the information currently stored in the storage, the update manager uses the identification information to request transfer of an updated minimum unit of the information from the control node.

16. The information management system according to claim 6, further comprising a control node for controlling communications between the nodes on the network,
the control node comprising:
an information storage for storing the information stored in the storage of each of the nodes;
an information manager for managing the information for each of the nodes and an update time thereof;
a update information receiver for receiving an update information from a first node at which an update of the information occurs; and
an update controller for
selecting a second node having the update time of the information stored therein, which is later than the update time included in the update information received from the first node, and
transmitting the updated minimum unit of the information identified by the identification information included in the update information received from the first node, to the second node.

17. A structured document processing system comprising a network composed of a server device and a plurality of client devices, the server device storing a structured document composed of a plurality of elements which are hierarchically structured, each of the elements being a constituent unit of the structured document, and each of the client devices storing a duplication of the structured document,
the server device (S) comprising:
an update manager (S1-S4) for managing an update of the structured document using an updated minimum element of the structured document, the updated minimum element including an updated portion of the structured document.

18. The structured document processing system according to claim 17, wherein the server device further comprises a transmission section, the update manager instructing the transmission section to transmit an updated minimum element of the structured document to a client device when the structured document has been updated.

19. The structured document processing system according to claim 17, wherein the server device further comprises a transmission section, the update manager instructing the transmission section to transmit update information to a client device when the structured document has been updated, the update information including identification information identifying an updated minimum element of the structured document.

20. The structured document processing system according to claim 17, wherein the update manager manages the update of the structured document using an update time at which the update of the structured document occurs,
wherein, when an update occurs at the node, the update manager instructing the transmission section to transmit update information to a client device, the update information including the update time.

21. The structured document processing system according to claim 20, wherein, when a client device receives the update information from the server device, the client device updates the structured document stored therein based on the update information received.

22. The structured document processing system according to claim 21, wherein each of the client devices comprises:
a comparator for comparing the update time of the update information received is later than an updated time of the structured document currently stored therein; and
a transmission controller for requesting transfer of an updated minimum element of the structured document when the update time of the update information received is later than the updated time of the structured document currently stored therein.

23. The structured document processing system according to claim 17, wherein the update manager transmits an updated minimum element of the structured document to a client device at a plurality of predetermined times.

24. The structured document processing system according to claim 17, wherein the update manager transmits update information to the client device at a plurality of predetermined times, the update information including identification information identifying an updated minimum element of the structured document.

25. The structured document processing system according to claim 24, wherein the update manager manages the update of the structured document using an update time at which the update of the structured document occurs, the update information further includes the update time.

26. The structured document processing system according to claim 17, further comprising:
a gateway server device performing protocol processing between the server device and each of the client devices,
wherein the server device transmits update information indicating that the structured document is updated to the gateway server device,
wherein the gateway server device comprises:
an structured document manager for managing the duplication of the structured document stored in the client device;
an update information receiver for receiving update information from the server device; and
an update controller for transmitting the update information received from the server device to the client device.

27. The structured document processing system according to claim 26, wherein the update controller transmits the update information received from the server device to the client device at a plurality of predetermined times.

28. The structured document processing system according to claim 26, wherein, when a client device receives the update information from the gateway server device, the client device updates the duplication of the structured document stored therein based on the update information received.

29. The structured document processing system according to claim 28, wherein each of the client devices comprises:
a comparator for comparing the update time of the update information received is later than an updated time of the structured document currently stored therein; and
a transmission controller for requesting transfer of an updated minimum element of the structured document when the update time of the update information received is later than the updated time of the structured document currently stored therein.

30. The structured document processing system according to claim 17, further comprising:
a gateway server device performing protocol processing between the server device and each of the client devices,
wherein the server device transmits update information including an update time and the updated minimum element to the gateway server device,
wherein the gateway server device comprises:
an structured document storage for storing the duplication of the structured document stored in the client device;
an structured document manager for managing the duplication of the structured document for the client device and an update time thereof;
an update information receiver for receiving the update information from the server device; and
an update controller for transmitting the updated minimum element of the structured document to a client device having the update time of the structured document stored therein, which is later than the update time included in the update information received from the server device.

31. An information management method in a system comprising a plurality of nodes connected to each other via a network, the method comprising the steps of:
at each of the plurality of nodes,
a) storing information to be shared among the plurality of nodes in a storage; and
b) managing an update of the information using an updated minimum unit of the information, the updated minimum unit including an updated portion of the information.

32. The information management method according to claim 31, wherein the step (b) comprises the steps of:
detecting that an update occurs at the node; and transmitting an updated minimum unit of the information to another node.

33. The information management method according to claim 31, wherein the step (b) comprises the steps of:
detecting that an update occurs at the node; and
transmitting update information to another node, the update information including identification information identifying an updated minimum unit of the information.

34. The information management method according to claim 32, further comprising the steps of:
at a node receiving an updated minimum unit of the information from another node,
c) updating a corresponding minimum unit of the information stored in the storage using the updated minimum unit received.

35. The information management method according to claim 31, wherein the information comprises a plurality of elements which are hierarchically structured, wherein a minimum element including the updated portion of the information is determined as the updated minimum unit.

36. The information management method according to claim 31, wherein in the step (b), the update of the information is managed using an update time at which the update of the information occurs,
wherein the step (b) comprises the steps of:
detecting that an update occurs at the node; and
transmitting update information to another node, the update information including the update time.

37. The information management method according to claim 36, further comprising the step of:
at a node receiving the update information from another node,
c) updating the information stored in the storage based on the update information received.

38. The information management method according to claim 37, wherein the step (c) comprises the steps of:
determining whether the update time of the update information received is later than an updated time of the information currently stored in the storage; and
when the update time of the update information received is later than an updated time of the information currently stored in the storage, requesting transfer of an updated minimum unit of the information.

39. The information management method according to claim 31, wherein, when an update occurs at the node, an updated minimum unit of the information is transmitted to another node at a plurality of predetermined times.

40. The information management method according to claim 31, wherein, when an update occurs at the node, update information is transmitted to another node at a plurality of predetermined times, the update information including identification information identifying an updated minimum unit of the information.

41. The information management method according to claim 40, wherein the update of the information is managed using an update time at which the update of the information occurs, the update information further includes the update time.

42. The information management method according to claim 33, wherein the system further comprises a control node for controlling communications between the nodes on the network,
the method further comprising the steps of:
at the control node,
c) managing the information stored in the storage for each of the nodes;
d) receiving an update information from a first node at which an update of the information occurs; and
e) transmitting the update information received from the first node to a second node.

43. The information management method according to claim 42, wherein in the step (e), the update information received from the first node is transmitted to the second node at a plurality of predetermined times.

44. The information management method according to claim 42, further comprising the steps of:
at the second node receiving the update information from the control node,
updating the information stored in the storage based on the update information received.

45. The information management method according to claim 44, further comprising the steps of:
at the second node,
determining whether the update time of the update information received is later than an updated time of the information currently stored in the storage; and
when the update time of the update information received is later than an updated time of the information currently stored in the storage, using the identification information to request transfer of an updated minimum unit of the information from the control node.

46. The information management method according to claim 36, the system further comprises a control node for controlling communications between the nodes on the network,
the method further comprising the steps of:
at the control node,
storing the information stored in the storage of each of the nodes in an information storage;
managing the information for each of the nodes and an update time thereof;
receiving an update information from a first node at which an update of the information occurs;
selecting a second node having the update time of the information stored therein, which is later than the update time included in the update information received from the first node; and
transmitting the updated minimum unit of the information identified by the identification information included in the update information received from the first node, to the second node.

47. A structured document updating method in a network composed of a server device and a plurality of client devices, the server device storing a structured document composed of a plurality of elements which are hierarchically structured, each of the elements being a constituent unit of the structured document, and each of the client devices storing a duplication of the structured document, the method comprising the steps of:
at the server device,
a) managing an update of the structured document using an updated minimum element of the structured document, the updated minimum element including an updated portion of the structured document; and
b) notifying the client devices on the network that the structured document is updated when a part of the structured document has been changed.

48. The structured document updating method according to claim 47, further comprising the steps of:
at a client device receiving an updated minimum element of the structured document from the server device,
c) updating a corresponding minimum element of the structured document stored therein using the updated minimum element received.

49. The structured document updating method according to claim 47, wherein in the step (a), the update of the information is managed using an update time at which the update of the information occurs,
wherein the step (b) comprises the step of:
transmitting update information to the client devices, the update information including the update time.

50. The structured document updating method according to claim 49, further comprising the step of:
at a client device receiving the update information from the server device,
c) updating the information stored therein based on the update information received.

51. The structured document updating method according to claim 50, wherein the step (c) comprises the steps of:
determining whether the update time of the update information received is later than an updated time of the structured document currently stored therein; and
when the update time of the update information received is later than an updated time of the structured document currently stored therein, requesting transfer of an updated minimum element of the structured document.

52. The structured document updating method according to claim 47, wherein an updated minimum unit of the structured document is transmitted to the client devices at a plurality of predetermined times.

53. The structured document updating method according to claim 47, wherein update information is transmitted to the client devices at a plurality of predetermined times, the update information including identification information identifying an updated minimum unit of the structured document.

54. The structured document updating method according to claim 53, wherein the update of the information is managed using an update time at which the update of the structured document occurs, the update information further includes the update time.

55. The structured document updating method according to claim 47, wherein the network further comprises a gateway server device performing protocol processing between the server device and each of the client devices,
the method further comprising the steps of:
at the gateway server device,
c) managing the structured document stored in each of the client devices;
d) receiving an update information from the server device; and
e) transmitting the update information received from the server device to a client device.

56. The structured document updating method according to claim 55, wherein in the step (e), the update information received from the server device is transmitted to the client device at a plurality of predetermined times.

57. The structured document updating method according to claim 55, further comprising the steps of:
at the client device receiving the update information from the gateway server device,
updating the structured document stored therein based on the update information received.

58. The structured document updating system according to claim 57, further comprising the steps of:
at the client device,
determining whether the update time of the update information received is later than an updated time of the structured document currently stored therein; and
when the update time of the update information received is later than an updated time of the structured document currently stored therein, using the identification information to request transfer of an updated minimum unit of the structured document from the gateway server device.

59. The structured document updating system according to claim 47, wherein the network further comprises a gateway server device performing protocol processing between the server device and each of the client devices,
the method further comprising the steps of:
at the gateway server device,
storing the structured document stored in each of the client devices in an information storage;
managing the structured document for each of the client devices and an update time thereof;
receiving an update information from the server device at which an update of the structured document occurs;
selecting a client device having the update time of the structured document stored therein, which is later than the update time included in the update information received from the server device; and
transmitting the updated minimum unit of the structured document identified by the identification information included in the update information received from the server device, to the selected client device.

60. A storage medium storing a computer program for performing information management in a system comprising a plurality of nodes connected to each other via a network, the computer program at each of the plurality of nodes, comprising the steps of:
a) storing information to be shared among the plurality of nodes in a storage; and
b) managing an update of the information using an updated minimum unit of the information, the updated minimum unit including an updated portion of the information.

61. A storage medium storing a computer program for updating a structured document in a network composed of a server device and a plurality of client devices, the server device storing a structured document composed of a plurality of elements which are hierarchically structured, each of the elements being a constituent unit of the structured document, and each of the client devices storing a duplication of the structured document, the computer program at the server device, comprising the steps of:
a) managing an update of the structured document using an updated minimum element of the structured document, the updated minimum element including an updated portion of the structured document; and
b) notifying the client devices on the network that the structured document is updated when a part of the structured document has been changed.
